(19) Europäisches Patentamt
European Patent Office
Office européen des brevets

(11) Veröffentlichungsnummer : **0 463 986 A2**

(12) # EUROPÄISCHE PATENTANMELDUNG

(21) Anmeldenummer : **91810083.5**

(51) Int. Cl.$^5$ : **B65G 1/06**

(22) Anmeldetag : **06.02.91**

(30) Priorität : **29.06.90 DE 4020686**

(43) Veröffentlichungstag der Anmeldung :
**02.01.92 Patentblatt 92/01**

(84) Benannte Vertragsstaaten :
**AT BE CH DE DK ES FR GB GR IT LI LU NL SE**

(71) Anmelder : **CATRAK AG**
**Birsweg 1**
**CH-4253 Liesberg (CH)**

(72) Erfinder : **Drier, Erich**
**Büntenweg 527**
**CH-4245 Kleinlützel (CH)**

(74) Vertreter : **Rottmann, Maximilian R.**
**c/o Rottmann, Zimmermann + Partner AG**
**Glattalstrasse 37**
**CH-8052 Zürich (CH)**

(54) **Regallageranlage.**

(57) Die Regallageranlage dient zur Aufnahme von Rolluntersätzen (2), die in mit Schienen (5) ausgerüsteten Lagerfächern hintereinander gereiht sind. Die Rolluntersätze (2) sind mit Hilfe einer Ketten- oder Seilschleife (14) über formschlüssig eingreifende Mitnehmer miteinender verbunden. Die Schleife ist mit ihrem oberen Strang zwischen den Schienen (5) so geführt, dass die an der Schleife angeordneten Mitnehmer in die Bewegungsbahn von Konstruktionsteilen (10) der Rolluntersätze ragen. Sobald der im Regalfach vorderste Rolluntersatz mit Hilfe eines Übernahmegeräts herausgezogen wird, werden die restlichen, sich im Regalfach befindlichen Rolluntersätze zwangsläufig gegen das Regalfachende hin gefördert.

EP 0 463 986 A2

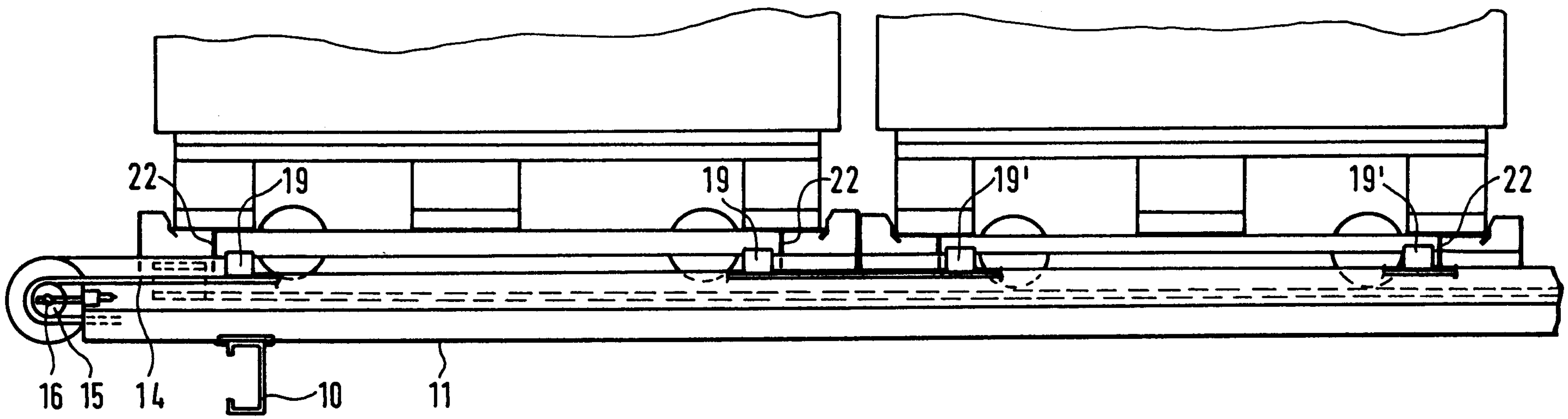


Fig. 2

Die vorliegende Erfindung bezieht sich auf eine Regallageranlage, bei welcher die zu lagernden Güter in mit Schienen ausgerüsteten Lagerfächern eines Lagergestells auf Rolluntersätzen untergebracht sind. Die Rolluntersätze werden mittels eines auf einem Regalbedienungsgerät angeordneten Übernahmegerätes aus den Fächern entnommen und in diese abgesetzt, wobei das Regalbedienungsgerät vor dem offenen Ende der Lagerfächer bewegbar ist, so dass jedes Fach mit Hilfe des Übernahmegerätes leicht und einfach bedient werden kann.

Bei solchen bekannten Anlagen können die Regalkanäle bzw. Regalfächer oder wenigstens die Schienen, welche in den Kanälen oder Fächern angeordnet sind, eine gewisse Neigung aufweisen, welche ein gegen das offene Ende der Fächer gerichtetes Gefälle darstellt, so dass die Rolluntersätze gegen das tiefer gelegene Ende der Schienen rollen, wo sie dann eventuell abgebremst, aber jedenfalls zuverlässig aufgehalten werden müssen. Die Beschickung der Kanäle erfolgt bei einem Einschublager ebenfalls vom tiefer gelegenen, offenen Ende des ausgewählten Faches aus, wobei die sich bereits im Fach befindlichen, beladenen Rolluntersätze entgegen der Schwerkraft gegen das andere, höher gelegene Schienenende gestossen werden.

Diese bekannte Ausführung setzt voraus, dass absolut zuverlässig wirkende Sicherheitsvorkehrungen ein Überfahren des tiefer gelegenen Schienenendes unter allen Umständen verhindern. Solche Sicherheitsvorkehrungen umfassen die Anordnung von Sensoren, welche die Bewegung der Rolluntersätze kontrollieren und ihre Geschwindigkeit berechnen, sowie Bremseinrichtungen, die den Sensorwerten entsprechend reagieren, und zwar unabhängig davon, ob die Rolluntersätze mehr oder weniger belastet sind. Dabei müssen die Bremseinrichtungen für die grösstmögliche Belastung dimensioniert werden.

Falls jedoch die Schienen nicht mit Gefälle, sondern horizontal verlegt werden, so bringt diese Lösung wieder andere Probleme mit sich. In diesem Falle wird nämlich nicht zwangsläufig dafür gesorgt, dass die Rolluntersätze automatisch, d.h. zum Beispiel schwerkraftbedingt, gegen das offene Ende der Lagerfächer rollen und dort bis zu ihrem Einsatz eine Wartestellung einnehmen. Gemeint ist immer der vorderste Rollunteruntersatz, da mit dem Übernahmegerät nur dieser oder die ersten zwei Rolluntersätze aus dem entsprechenden Lagerfach entnommen werden kann bzw. können, worauf die nachfolgenden Rolluntersätze, bei geneigter Schienenbahn infolge Schwerkraft, nachrücken. Um sicherzustellen, dass der vorderste Rolluntersatz sich am Entnahmeende der Schienenbahn und somit im Betätigungsbereich des Übernahmegerätes befindet, sind bei horizontal verlegten Schienen spezielle Förderorgane wie z.B. Schubstangen od. ähnliche Vorrichtungen erforderlich, die die Bewegung der Rolluntersätze gegen das Entnahmeende hin bewirken.

Solche Förderorgane sind wiederum kompliziert und verteuern die Bau- und Betriebskosten einer solchen Regallageranlage.

Gemäss einer weiteren bekannten Lösung (EP 0 126 431), die sich auch für horizontal verlaufende, d.h. nicht geneigte Lagerkanäle eignet, sind die Rolluntersätze mit festen Kopplungselementen versehen, mittels welchen alle sich in einem Lagerkanal befindlichen Rolluntersätze miteinander gekoppelt sind und einen Rollpalettenzug bilden. Die An- und Entkoppelung des vordersten Rolluntersatzes erfolgt durch eine quer zur Bewegungsrichtung der Rolluntersätze gerichtete Versetzbewegung derselben gegenüber dem anschliessenden Rolluntersatz. Diese Versetzbewegung wird durch ein Transportfahrzeug bei der Ein- oder Auslagerung des Rolluntersatzes ausgeführt

In dieser Weise wird eine zwangsweise Bewegung aller sich in einem Transportkanal befindlichen Rolluntersätzen erreicht, indem bei der Auslagerung des vordersten Rolluntersatzes die nachfolgenden Rolluntersätze nachgezogen werden. Anschliessend muss das Transportfahrzeug eine seitliche oder vertikale Versetzbewegung ausführen, um den vordersten Rolluntersatz vom Rollpalettenzug zu lösen. Beim gegenteiligen Vorgang, d.h. bei der Absetzung eines Rolluntersatzes in einem Lagerkanal, muss das Transportfahrzeug zusammen mit dem im Kanal abzusetzenden Rolluntersatz eine horizontale oder vertikale Versetzbewegung ausführen, um ein Ankoppeln des Rolluntersatzes an den Rollpalettenzug zu erwirken.

Dieses Vorgehen bringt jedoch schwer zu lösende Probleme und weitere Nachteile mit sich. Wird z.B. der vorderste Rolluntersatz mit Hilfe des Transportfahrzeugs ausgelagert, so muss ein am Entnahmeende des Lagerkanals angeordneter Anschlag, der aus Sicherheitsgründen zwingend vorgeschrieben ist, mit dem auszulagernden Rolluntersatz in Höhenrichtung überwunden werden. Der Rolluntersatz muss dazu an seinem vorderen Teil angehoben werden und kommt dadurch in eine leichte Schräglage, was zum Lösen oder zum Verkeilen der fest an den Rolluntersätzen angeordneten Kopplungselementen führen kann. Sowohl ein Verkeilen als auch ein vorzeitiges Lösen der Kopplung hat verhängnisvolle Wirkungen und muss unbedingt vermieden werden.

Ein weiterer Nachteil besteht darin, dass bei der erwähnten bekannten Ausführung die Ausrüstung der Rolluntersätze mit Kopplungselementen eine wesentliche Verteuerung einer solchen Anlage bedeutet, die oft mehrere Tausend Rolluntersätze umfasst.

Im Anschluss an die geschilderten Probleme stellt sich die durch die Erfindung zu lösende Aufgabe in der Entwicklung einer Ausführung zum absolut zuverlässigen, zwangsläufigen Bewegen der Rolluntersätze gegen das Entnahmeende eines Lagerregalfachs, welche auch bei horizontal verlegter Schienenbahn einwandfrei sichert, dass bei einer Entnahme des vordersten Rolluntersatzes aus dem Lagerfach die nachfolgenden, lose hintereinandergereihten Rolluntersätze nachrücken.

Insbesondere sollte keine direkte Verbindung zwischen den einzelnen Rolluntersätzen mittels Kopplungsorganen erforderlich sein, so dass die gewöhnlichen, weit verbreiteten Rolluntersätze ohne jegliche Abänderung oder Ergänzung gebraucht werden können.

Eine weitere Teilaufgabe der Erfindung ist ferner, eine Konstruktion zu finden, die nicht nur das Nachrücken der Rolluntersätze bei horizontal verlegten Schienen sicherstellt, sondern auch bei geneigter Schienenbahn angewendet werden kann, indem das Abbremsen oder Arretieren der Rolluntersätze bewirkt wird.

Zur Lösung der gestellten Aufgabe wird eine Regallageranlage vorgeschlagen, welche die im Anspruch 1 aufgeführten Merkmale aufweist.

In den Ansprüchen 2 - 8 sind vorteilhafte Ausführungsformen der Anlage näher definiert, wobei die Merkmale nach den Ansprüchen 7 und 8 sich hervorragend zur Lösung der Teilaufgabe eignen.

Auf beiliegenden Zeichnungen ist ein Ausführungsbeispiel der für die Erfindung wesentlichen Teile einer Anlage dargestellt, und zwar zeigen:

Fig.1 eine perspektivische Ansicht der allgemeinen Anordnung einer Regallageranlage;

Fig.2 das Endstück der Schienenfahrbahn eines Regalfaches;

Fig.3 eine Einzelheit zu Fig.2 in vergrössertem Masstab gezeichnet; und

Fig.4 eine Ansicht in der Pfeilrichtung A der Fig.2 oder 3.

In der Fig.1 ist eine Regallageranlage dargestellt, welche ein Lagergestell zur Aufnahme von Rolluntersätzen 2 aufweist, die mit Gütern 1 beladen sind. Das Gestell setzt sich aus vertikalen Stützträgern 3 und horizontalen Querträgern 4 zusammen, auf welchen Schienen 5 befestigt sind. In dieser Weise werden Regalfächer gebildet, in welchen eine Anzahl beladener Rolluntersätze 2 auf den Schienen 5 rollend lose hintereinander aufgereiht sind.

Die Schienen 5 verlaufen im wesentlichen horizontal oder mit leichtem Gefälle gegen das Entnahmeende des Lagerfachs hin, so dass die einzelnen Rolluntersätze 2 sich ohne äussere Einwirkung nicht bewegen. Ein ungewolltes Überfahren des Schienenendes ist mit Hilfe von Endanschlägen (nicht dargestellt) verhindert, die ausserhalb der Schienen 5 seitlich angeordnet sind, und gegen welche der vordere Querträger des vordersten Rolluntersatzes 2 anstösst.

An der Entnahmeseite der Regalfächer ist ein Regalbedienungsgerät 6 angeordnet, welches eine in der Höhe verstellbare Plattform 7 und auf dieser ein Übernahmegerät 8 mit teleskopisch ein- und ausfahrbarem Tragarm 9 zum Untergreifen eines Rolluntersatzes 2 aufweist.

Zum Nachrücken der bei der Entnahme des vordersten Rolluntersatzes im Regalfach verbleibenden Rolluntersätze 2, zum Entnahmeende des Regalfachs hin, ist in jedem Lagerfach ein Transportorgan vorhanden, welches in den Fig. 2 - 4 näher dargestellt ist. Wesentlich ist, dass sich jedes Transportorgan zwischen und unterhalb der Schienen 5 parallel zu diesen, d.h. in der Bewegungsrichtung der Rolluntersätze 2, erstreckt und Mitnehmerorgane aufweist, die in Abstand zueinander angeordnet sind, wobei ein Teil der Mitnehmerorgane in die Bewegungsbahn der Rolluntersätze 2 ragt. Die Anordnung ist dabei so getroffen, dass bei der Bewegung eines beliebigen Rolluntersatzes 2 durch die Vermittlung des Transportorganes die Mitbewegung der übrigen sich in diesem Lagerfach befindlichen Rolluntersätze 2 erfolgt, wie dies noch näher beschrieben wird.

Gemäss den Fig. 2 - 4 ist auf Querträgern 10 (in der Fig.2 nur ein Querträger dargestellt) ein Profilträger 11 mittels Spannschrauben 12 und Druckplatten 13 befestigt. Dieser Profilträger 11 erstreckt sich unterhalb der Schienen 5, auf die Längsmittelebene derselben ausgerichtet, von der Entnahmeseite des Regalfaches annähernd bis zum Ende desselben. Gemäss der dargestellten Ausführung setzt sich der Profilträger 11 aus einem liegenden C-Profil 11′ und aus einem umgekehrten U-Profil 11″ zusammen und dient zum Führen einer endlosen Schleife, die mit Mitnehmerorganen 19 ausgerüstet ist. Die Schleife hat einen oberen und einen unteren Strang, wobei die Mitnehmerorgane 19 des einen Schleifenstranges in die Bewegungsbahn der Rolluntersätze 2 ragen.

Gemäss dem Ausführungsbeispiel setzt sich die endlose Schleife aus zwei parallelen, endlosen Seilen 14 zusammen, welche über Umlenkrollen 15 geführt sind, die paarweise an den beiden Enden des Profilträgers 11 je auf einer gemeinsamen Welle 16 frei rotierend angeordnet sind. Anstelle der Seile 14 können auch Ketten vorgesehen sein.

Wie aus der Fig.4 besonders hervorgeht, ist der obere Strang der Seile 14 im Bereiche des oberen Teils 11" des Profilträgers 11 ausserhalb diesem geführt, während der untere Strang der Seile 14 innerhalb des unteren Profilträgerteils 11′ verläuft. Die Welle 16 ist im oberen Profilträgerteil 11″ gelagert und trägt die beiden Umlenkrollen 15, welche links und rechts ausserhalb des Profiloberteils 11″ parallel zu den beiden vertikalen Seitenflanken des Profiloberteils 11″ angeordnet sind. Ferner sind noch Spannbolzen 17 vorhanden, die am einen Ende die Lagerung der Welle 16 aufnehmen und in einer Spannhülse 18 verstellbar angeordnet sind (Fig.3).

Die Mitnehmerorgane 19 sind an den beiden parallelen Seilen 14 im Abstand voneinander angeordnet und an den Seilen 14 befestigt, wie dies insbesondere aus den Fig.2 - 4 hervorgeht. Die Mitnehmerorgane 19, die sich momentan am oberen Strang der Seile 14 befinden, ragen mit ihrem sich in der Längsmittelebene 20 des Profilträgers befindlichen Teil 21 in die Bewegunsbahn der Rolluntersätze 2, und zwar in die Bewegungsbahn von Quertraversen 22, die paarweise und zwar vorne und hinten am unteren Teil jedes Rolluntersatzes 2 angeordnet sind. Zwei paarweise zusammenwirkende Mitnehmerorgane 19 bzw.19', deren bestand etwas kleiner als der Abstand der vorderen und hinteren Quertraversen 22 voneinander ist, befinden sich zwischen der vorderen und hinteren Quertraverse 22 desselben Rolluntersatzes 2, so dass bei einer Bewegung der Seile 14, sei es vorwärts oder rückwärts, die Rolluntersätze 2 in beiden Richtungen mitgenommen werden.

Im Betrieb wird zur Entnahme des vordersten Rolluntersatzes 2 der Vorderteil desselben mittels des teleskopisch ausziehbaren Tragarmes 9 des Übernahmegerätes 7 ergriffen, zunächst nur gerade über den Endanschlag am Schienenende gehoben und aus dem Regalfach gezogen. Bei dieser Bewegung stösst die hintere Quertraverse 22 gegen das sich vor ihr befindliche Mitnehmerorgan 19 und bewegt dieses vor sich her, wodurch die endlosen Seile 14 ebenfalls in Bewegung gesetzt werden. Die weiteren an den Seilen 14 angeordneten Mitnehmerorgane 19 bewegen in der gleichen Weise die übrigen, lose hintereinander gereihten Rolluntersätze 2, bis der anfänglich an zweiter Stelle sich befindende Rolluntersatz 2 bis zum Endanschlag am Schienenende fortbewegt wurde. In diesem Moment taucht der vorderste Mitnehmer über die am Entnahmeende des Lagerfachs angeordnete Umlenkrolle ab, so dass dieser Mitnehmer nicht mehr weiterbewegt wird; dadurch kommt auch das Transportorgan zum Stillstand.

Beim Absetzen eines Rolluntersatzes 2 mittels des Übernahmegerätes 7 wird ähnlich vorgegangen. Der Rolluntersatz 2 wird vom Tragarm 9 des Übernahmegerätes 7 zuerst über den Endanschlag gehoben und anschliessend auf den Schienen in das ausgewählte Lagerfach gestossen. Bei dieser Bewegung werden die weiteren in loser Folge angeordneten Rolluntersätze 2 durch die verschiedenen Mitnehmer 19 der Ketten 14 gegen das innere Ende des Lagerfachs bewegt.

In jedem Falle, und zwar sowohl beim Einlagern als auch beim Auslagern eines Rolluntersatzes 2, wird erreicht, dass durch das Bewegen des betreffenden Rolluntersatzes auch die übrigen sich im Lagerfach befindlichen Rolluntersätze simultan bewegt werden, unabhängig davon, ob die Schienen ein Gefälle oder eine Steigung gegen das Entnahmeende aufweisen oder absolut horizontal verlaufen, was meistens der Fall sein könnte. Dabei können die gewöhnlichen Rolluntersätze ohne jegliche zusätzliche Ergänzung oder Änderung verwendet werden.

Das beschriebene Transportorgan, bestehend aus einer endlosen, mit Mitnehmerorganen ausgerüsteten Schleife, die über Umlenkorgane geführt ist, beinhaltet eine sehr einfache und betriebssicher arbeitende Konstruktion, welche jedoch für Spezialzwecke ergänzt werden kann.

Gemäss einer Weiterausbildung der beschriebenen Anlage ist es möglich, Mittel zum Antreiben und/oder zum Bremsen der endlos geführten Seile oder Ketten vorzusehen. Um eine grössere und unbeschränkte Manövrierfähigkeit der Rolluntersätze in einem Regalfach zu ermöglichen, und zwar unabhängig vom Einsatz eines Übernahmegerätes, kann ein Antriebsmotor mit Getriebe zum Hinund Herbewegen mindestens einer der Umlenkrollen vorgesehen sein. Mit dem Motor und Getriebe lässt sich auch eine Bremswirkung erzielen, die bei konstruktiv bedingtem, stärkeren Gefällen im Regalfach von Vorteil sein kann.

Eine einfachere Lösung bildet die Verwendung von wenigstens einer Bremse, welche vorteilhaft auf eine der Umlenkrollen 14 wirkt, zur Regulierung der Fördergeschwindigkeit der Rolluntersätze auf geneigten Bahnen, wobei die Bremse mit einer Geschwindigkeitsüberwachungseinrichtung, in der einfachsten Form mit einem Fliehkraftregler, kombiniert werden kann.

Schliesslich seinoch erwähnt, dass die praktische Ausführung des Transportorgans keinesfalls auf eine endlose Schleife beschränkt sein muss, sondern z.B. als Verbindungsstab ausgebildet sein kann, der sich zwischen den Schienen befindet und dort hin- und herbeweglich gelagert ist. Der Stab ist dann mit nach oben oder seitlich sich erstreckenden Bolzen versehen, die als Mitnehmerorgane dienen und in die Bewegungsbahn der Rolluntersätze ragen.

## Patentansprüche

1. Regallageranlage, bei der die zu lagernden Güter in mit Schienen ausgerüsteten Lagerfächern eines Lagergestells auf Rolluntersätzen untergebracht sind und mittels eines auf einem Regalbedienungsgerät angeordneten Übernahmegerätes aus den Fächern entnommen und in diese abgesetzt werden, dadurch gekennzeichnet, dass die in einem Lagerfach hintereinander gereihten Rolluntersätze (2) mittels eines für alle Rolluntersätze des betreffenden Lagerfachs gemeinsamen, im betreffenden Lagerfach angeordneten, bewegbar geführten Transportorgans (14) verschiebbar sind.

2. Regallageranlage nach Anspruch 1, dadurch gekennzeichnet, dass sich das Transportorgan (14) innerhalb des Lagerfachs in der Bewegungsrichtung der Rolluntersätze (2) erstreckt, in dieser Richtung bewegbar gelagert ist und Mitnehmerorgane (19) aufweist, die im Abstand voneinander angeordnet sind, wobei ein Teil der Mitnehmerorgane in die Bewegungsbahn der Rolluntersätze (2) ragt und bei der Bewegung eines beliebigen Rolluntersatzes im oder aus dem Lagerfach heraus, durch die Vermittlung des Transportorganes (14), die Mitbewegung der übrigen Rolluntersätze bewirken.

3. Regallageranlage nach den Ansprüchen 1 und 2, dadurch gekennzeichnet, dass das Transportorgan (14) als endlos umlaufende Schleife ausgebildet und mittels an beiden Enden des Lagerfaches angeordneten, nicht angetriebenen Umlenkorganen (15) geführt ist.

4. Regallageranlage nach den Ansprüchen 1 - 3, dadurch gekennzeichnet, dass die Schleife als mindestens eine endlose Kette oder als mindestens ein endloses Seil (14) mit einem zwischen den Schienen (5) der Rolluntersätze (2) geführten Strang ausgebildet ist, welche bzw. welches mit Mitnehmern (19) ausgerüstet ist, die in die Bewegungsbahn von Konstruktionsteilen (22) der Rolluntersätze ragen, wobei die auf ein Umlenkorgan auflaufenden Mitnehmer dieses Strangs, je nach Umlaufrichtung der Schleife, sich aus der Bewegungsbahn entfernen oder in diese gelangen, und wobei die Mitnehmer des anderen Stranges sich ausserhalb der Bewegungsbahn der genannten Konstruktionsteile der Rolluntersätze befinden.

5. Regallageranlage nach den Ansprüchen 1 - 4, dadurch gekennzeichnet, dass die Schleife in einer vertikalen Ebene geführt ist.

6. Regallageranlage nach den Ansprüchen 1 und 2, dadurch gekennzeichnet, dass das Transportorgan als horizontal hin- und herbeweglicher, in der Längsrichtung zwischen den Schienen (5) der Rolluntersätze (2) angeordneter Verbindungsstab ausgebildet ist, der als Mitnehmerorgane sich nach oben oder seitlich erstreckende Bolzen aufweist.

7. Regallageranlage nach einem der vorangehenden Ansprüche 1 - 5, dadurch gekennzeichnet, dass das Transportorgan mit einer Bremseinrichtung ausgerüstet ist.

8. Regallageranlage nach Anspruch 7, dadurch gekennzeichnet, dass mindestens das eine Umlenkorgan mit einer Geschwindigkeitsüberwachungs- und/oder Bremseinrichtung ausgerüstet ist.

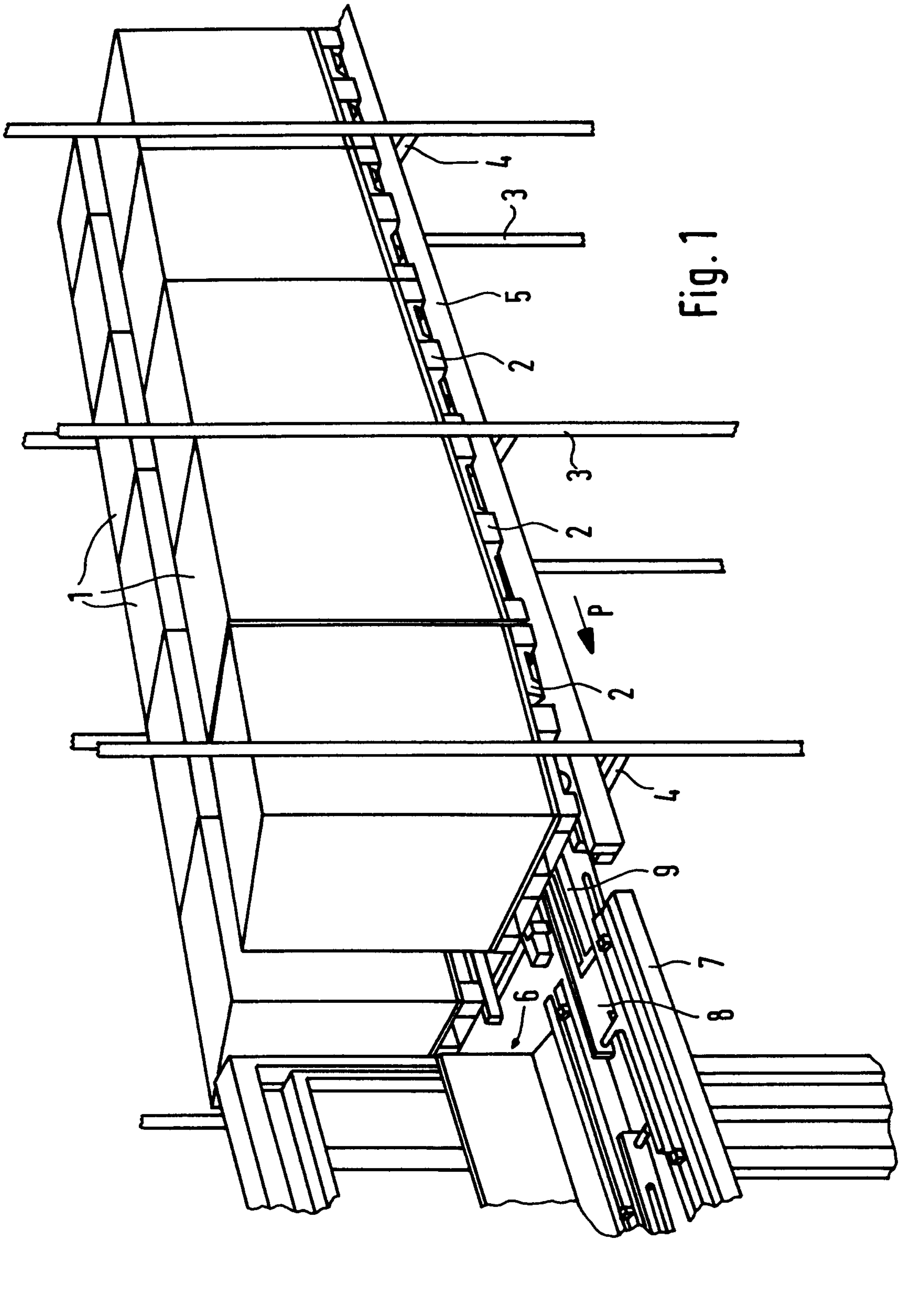


Fig. 1

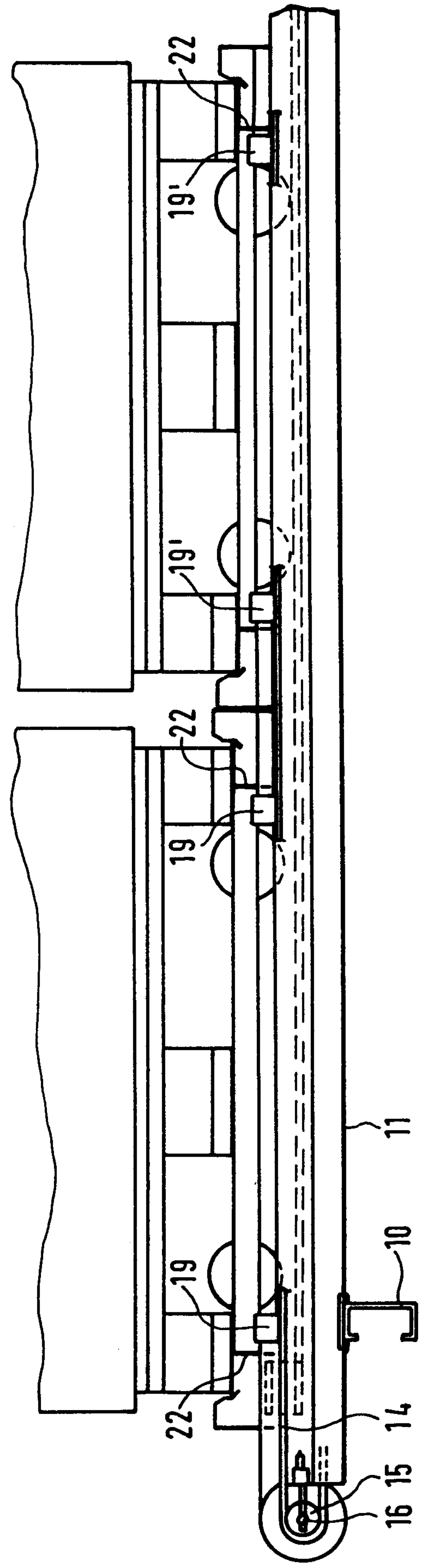


Fig. 2

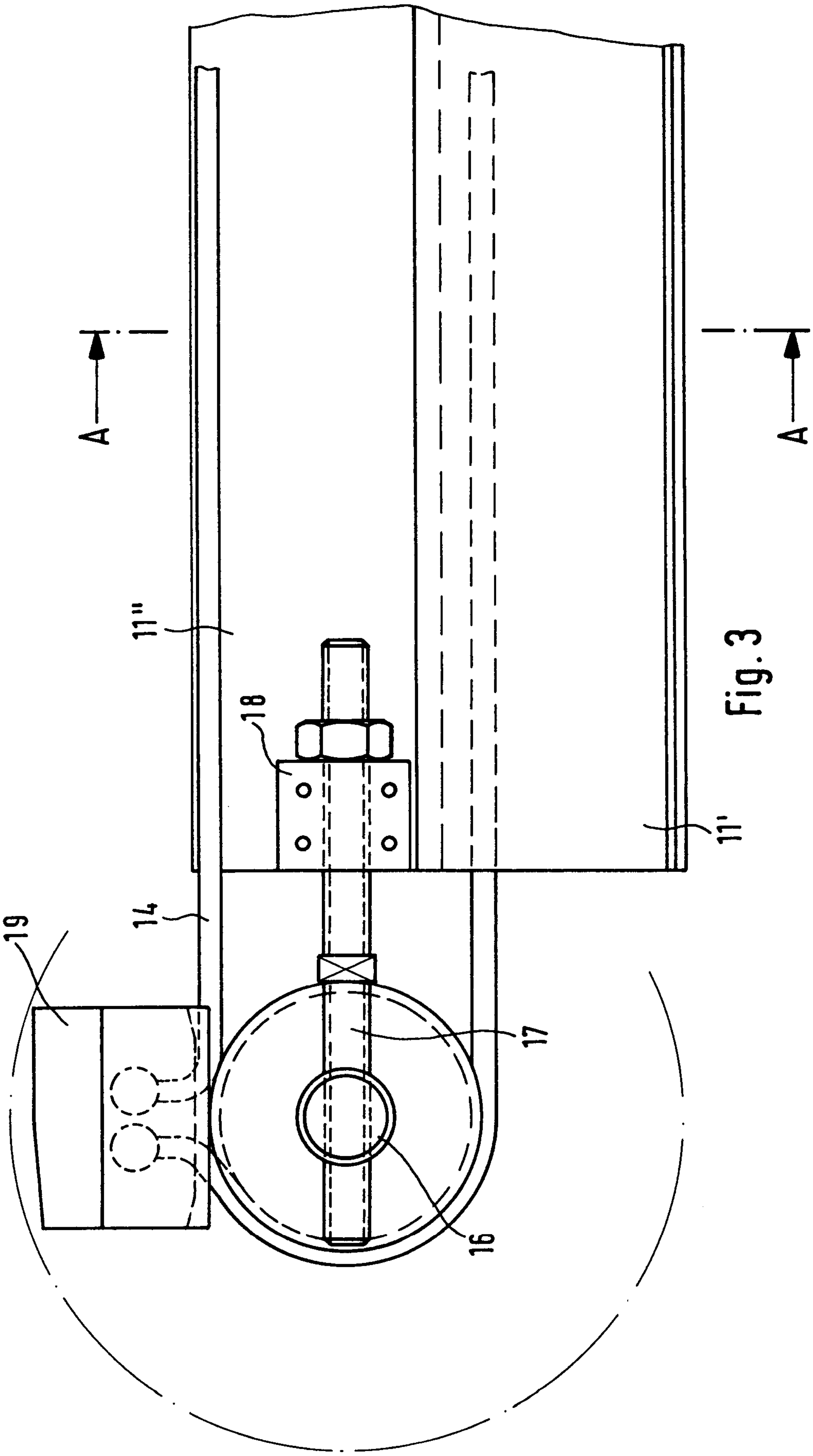


Fig. 3

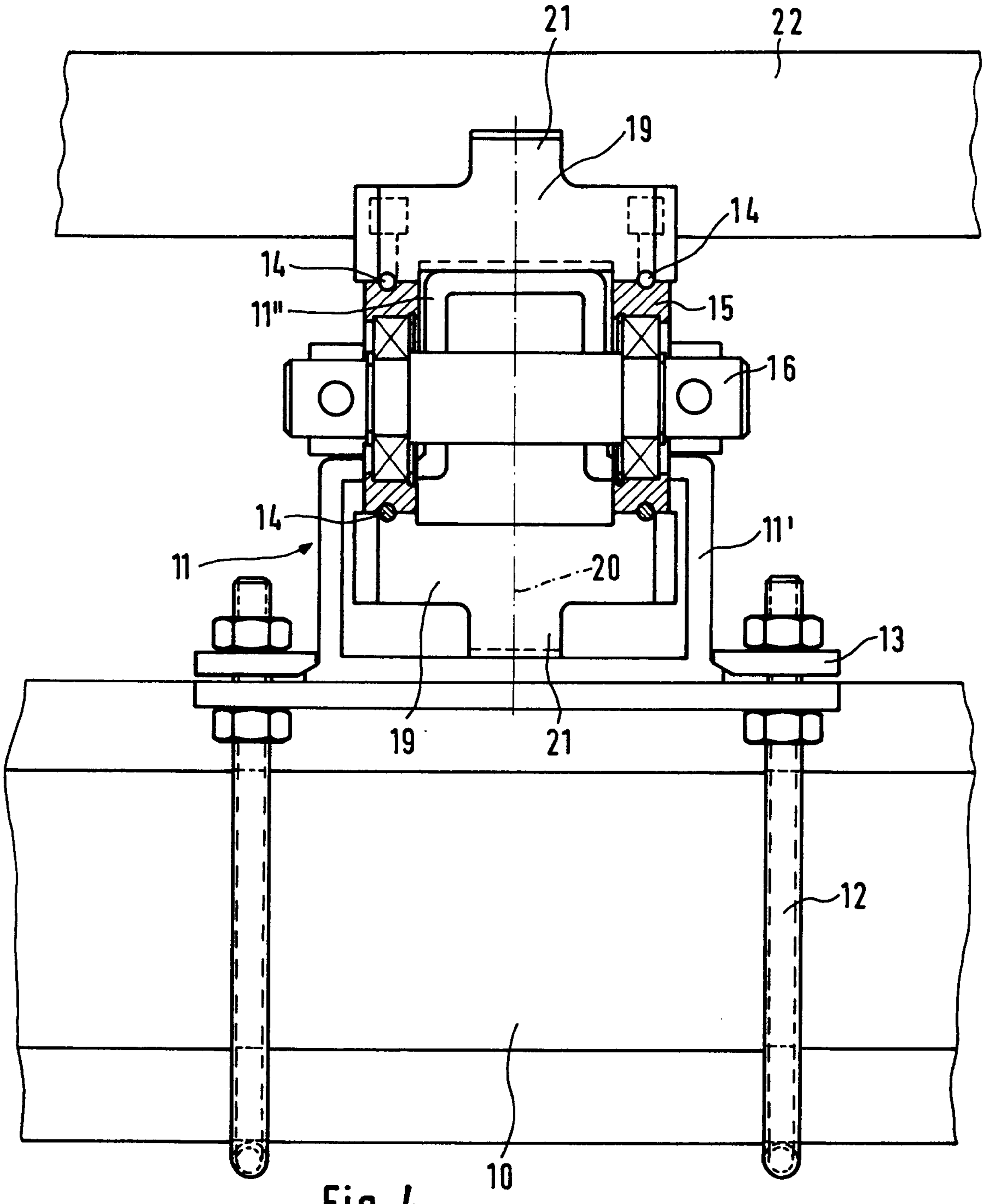


Fig. 4